# FASCICULE DE BREVET EUROPEEN

(11) **EP 2 705 086 B1**
(45) Date de publication et mention de la délivrance du brevet: **08.07.2015**
(21) Numéro de dépôt: 12719688.9
(22) Date de dépôt: 04.05.2012
(51) Int. Cl.: C08L 9/06, B60C 1/00, C08L 7/00, C08L 9/00, C08K 5/01, C08L 91/00, C08L 93/00

(54) **PNEUMATIQUE DONT LA BANDE DE ROULEMENT COMPORTE UN SBR EMULSION A HAUT TAUX DE TRANS.**
FAHRZEUGREIFEN MIT EINER LAUFFLÄCHE MIT EINEM EMULSIONS-SBR MIT HOHEM TRANSGEHALT
TYRE WITH A TREAD COMPRISING AN EMULSION SBR HAVING A HIGH TRANS CONTENT

(30) Priorité: 06.05.2011 FR 1153879
(43) Date de publication de la demande: 12.03.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: RINGOT, Claude, F-63040 Clermont-Ferrand Cedex 9 (FR)
(74) Mandataire: Ribière, Joel
(86) Numéro de dépôt international: PCT/EP2012/058257
(87) Numéro de publication internationale: WO 2012/152696

(56) Documents cités:
- EP-A1- 1 726 617
- WO-A1-01/56812
- FR-A1- 2 925 914
- FR-A1- 2 943 065
- FR-A1- 2 947 275

## Description

La présente invention est relative aux bandes de roulement de pneumatiques et aux compositions de caoutchouc à base d'élastomère diénique, utilisables pour la fabrication de telles bandes de roulement de pneumatiques.

Une bande de roulement de pneumatique doit obéir de manière connue à un grand nombre d'exigences techniques, souvent antinomiques, parmi lesquelles une faible résistance au roulement, une résistance élevée à l'usure, ainsi qu'une adhérence élevée sur route sèche comme humide.

Ce compromis de propriétés, en particulier du point de vue de la résistance au roulement et de la résistance à l'usure, a pu être amélioré ces dernières années sur les « Pneus Verts » à faible consommation d'énergie, destinés notamment aux véhicules tourisme, grâce notamment à l'emploi de nouvelles compositions de caoutchouc faiblement hystérétiques ayant pour caractéristique d'être renforcées majoritairement de charges inorganiques spécifiques qualifiées de renforçantes, notamment de silices hautement dispersibles dites "HDS" (*Highly Dispersible Silica*), capables de rivaliser, du point de vue du pouvoir renforçant, avec les noirs de carbone conventionnels de grade pneumatique.

L'amélioration des propriétés d'adhérence sur sol humide et de résistance à l'usure, sans pénalisation notable de la résistance au roulement, est aujourd'hui une préoccupation constante des concepteurs de pneumatiques.

Poursuivant leurs recherches, les Demanderesses ont découvert une composition de caoutchouc spécifique qui, utilisée comme bande de roulement de pneumatique, permet d'atteindre l'objectif ci-dessus.

Ainsi, un premier objet de l'invention concerne un pneumatique dont la bande de roulement comprend une composition de caoutchouc comportant au moins :
- 35 à 65 pce d'un copolymère styrène-butadiène émulsion « E-SBR » dit premier élastomère diénique dont le taux de motifs butadiényl 1,4-trans est supérieur à 50% en poids du total des motifs butadiényl ;
- 35 à 65 pce d'un polybutadiène (BR), à titre de second élastomère diénique ;
- optionnellement, 0 à 30 pce d'un autre élastomère diénique dit troisième élastomère diénique ;
- 90 à 150 pce d'une charge inorganique renforçante ;
- un système plastifiant comprenant :
- selon un taux A compris entre 10 et 60 pce, une résine hydrocarbonée présentant une Tg supérieure à 20°C ;
- selon un taux B compris entre 10 et 60 pce, un plastifiant liquide à 20°C dont la Tg est inférieure à -20°C ;
- étant entendu que A+B est supérieur à 45 pce.

Les pneumatiques de l'invention sont particulièrement destinés à équiper des véhicules à moteur de type tourisme, incluant les véhicules 4x4 (à quatre roues motrices) et les véhicules SUV (*"Sport Utility Vehicles"*)*,* des véhicules deux roues (notamment motos) comme des véhicules industriels choisis en particulier parmi camionnettes et "Poids-lourd" tels que bus, engins de transport routier tels que camions.

L'invention ainsi que ses avantages seront aisément compris à la lumière de la description et des exemples de réalisation qui suivent.

### 1 - MESURES ET TESTS UTILISES

### I.1 - Freinage sur sol humide

Le test d'adhérence sur sol humide consiste à monter des pneumatiques à l'avant et à l'arrière d'un véhicule automobile de marque « Volswagen » et de modèle « Golf 6 », équipé d'un système de freinage ABS. Les pneumatiques sont gonflés à pression nominale. La température ambiante des essais est de 25°C. La distance nécessaire pour passer de 80 km/h à 10 km/h est mesurée lors d'un freinage brutal en ligne droite sur sol arrosé (béton bitumineux). Une valeur supérieure à celle du pneumatique témoin, arbitrairement fixée à 100, indique un résultat amélioré, c'est-à-dire une distance de freinage plus courte que celle du pneumatique témoin.

### I.2 - Résistance au roulement

La résistance au roulement des pneumatiques est mesurée sur un volant, selon la méthode ISO 87-67 (1992). Une valeur supérieure à celle du pneumatique témoin, arbitrairement fixé à 100, indique un résultat amélioré, c'est-à-dire une résistance au roulement inférieure à celle du pneumatique témoin.

### I.3 - Résistance à l'usure

On soumet les pneumatiques à un roulage réel sur route, sur un véhicule automobile déterminé, jusqu'à ce que l'usure due au roulage atteigne les témoins d'usure disposés dans les rainures de la bande de roulement. Une valeur supérieure à celle du pneumatique témoin, arbitrairement fixé à 100, indique un résultat amélioré, c'est-à-dire un kilométrage parcouru supérieur à celui du pneumatique témoin.

### II - DESCRIPTION DETAILLEE DE L'INVENTION

Dans la présente description, sauf indication expresse différente, tous les pourcentages (%) indiqués sont des pourcentages en masse.

Par élastomère (ou indistinctement caoutchouc) "diénique", on entend un élastomère issu au moins en partie (c'est-à-dire un homopolymère ou un copolymère) de monomère(s) diène(s) (i.e., porteur(s) de deux doubles liaisons carbone-carbone, conjuguées ou non). Par "élastomère isoprénique", on entend un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

L'abréviation "pce" (usuellement "*phr*" en anglais) signifie parties en poids pour cent parties d'élastomère ou caoutchouc (du total des élastomères si plusieurs élastomères sont présents).

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Toutes les valeurs de température de transition vitreuse (« Tg ») sont mesurées de manière connue par DSC (Differential Scanning Calorimetry) selon la norme ASTM D3418 (1999), sur des élastomères à l'état sec, non réticulé. La microstructure des élastomères est bien connue des fournisseurs d'élastomères, déterminable notamment par analyse RMN ou analyse IR.

Le pneumatique de l'invention a donc pour caractéristique essentielle que sa bande de roulement comporte une composition de caoutchouc comprenant au moins un copolymère de styrène-butadiène émulsion particulier en coupage avec un polybutadiène, une charge inorganique renforçante, un système plastifiant spécifique, composants qui vont être décrits en détail ci-après.

### II.1 - Elastomères diéniques

La composition de la bande de roulement du pneumatique selon l'invention a pour caractéristique essentielle de comporter, à titre de premier élastomère diénique de 35 à 65 pce d'un copolymère styrène-butadiène émulsion (E-SBR) dont le taux de motifs butadiènyl 1,4-trans est supérieur à 50% en poids du total des motifs butadiényl (pour rappel, motifs 1-2, 1-4 cis et 1-4 trans), et de 35 à 65 pce d'un polybutadiène, à titre de second élastomère diénique. Préférentiellement le taux de E-SBR est de 45 à 65 pce. Et préférentiellement le taux de BR est de 35 à 55 pce.

Préférentiellement le copolymère E-SBR comporte plus de 60%, plus préférentiellement entre 60 et 80 % en poids du total des motifs butadiényl.

Selon un autre mode de réalisation préférentiel de l'invention, le E-SBR ci-dessus présente un taux de styrène d'au plus 50 % (% en poids du E-SBR), plus préférentiellement compris entre 10 et 50 %, encore plus préférentiellement compris dans un domaine de 20 et 45 % en poids du copolymère E-SBR.

Les copolymères SBR émulsion, encore appelés E-SBR, sont des copolymères bien connus de l'homme du métier des pneumatiques et de la caoutchouterie. Il s'agit de copolymères diéniques statistiques, par opposition notamment aux copolymères du type thermoplastiques à blocs styrène et blocs butadiène ; ils sont polymérisés en émulsion en présence d'eau et d'un émulsifiant, généralement selon un procédé à froid. On peut citer en particulier ceux de série 1500 (non étendus à l'huile) ou ceux de série 1700 (étendus à l'huile, e.g. SBR 1723, SBR 1732 et SBR 1739). Leur Tg est préférentiellement comprise entre -65°C et -25°C.

L'homme du métier sait comment modifier la microstructure d'un copolymère à base de styrène et de butadiène, en particulier d'un E-SBR, pour augmenter et ajuster sa Tg, notamment en jouant sur les teneurs en styrène, en liaisons -1,2 ou encore en liaisons trans-1,4 de la partie butadiénique.

La composition de la bande de roulement du pneumatique selon l'invention a pour autre caractéristique essentielle de comporter, à titre de second élastomère diénique de 35 à 65 pce d'un polybutadiène, en particulier ceux ayant une teneur (% molaire) en unités -1,2 comprise entre 4% et 80% ou ceux ayant une teneur (% molaire) en cis-1,4 supérieure à 80%, plus préférentiellement supérieur à 90%.

Au copolymère E-SBR et au polybutadiène décrits ci-dessus, peut être associé au moins un troisième élastomère diénique, optionnel, différent des premier et second élastomères diéniques, dont le taux pondéral est compris dans un domaine de 0 à 30 pce. Plus préférentiellement, le taux de troisième élastomère diénique est compris dans un domaine de 10 à 30 pce.

Ce troisième élastomère diénique éventuel est préférentiellement choisi dans le groupe constitué par le caoutchouc naturel (NR), les polyisoprènes de synthèse (IR), les copolymères de butadiène, les copolymères d'isoprène et les mélanges de ces élastomères ; de tels copolymères sont plus préférentiellement choisis dans le groupe constitué par les copolymères de styrène-butadiène (SBR) (autres que le premier élastomère diénique à fort taux de trans), les copolymères d'isoprène-butadiène (BIR) et les copolymères d'isoprène-styrène (SIR).

Ce troisième élastomère diénique possible peut avoir toute microstructure qui est fonction des conditions de polymérisation utilisées, notamment de la présence ou non d'un agent modifiant et/ou randomisant et des quantités d'agent modifiant et/ou randomisant employées. Le troisième élastomère peut être par exemple à blocs, statistique, séquencé, microséquencé, et être préparé en dispersion ou en solution ; il peut être couplé et/ou étoilé ou encore fonctionnalisé avec un agent de couplage et/ou d'étoilage ou de fonctionnalisation. Parmi ces derniers, conviennent notamment les homopolymères polyisoprène (IR) ; les copolymères butadiène-styrène (SBR) solution et en particulier ceux ayant une Tg comprise entre 0°C et - 70°C et plus particulièrement entre - 10°C et - 60°C, une teneur en styrène comprise entre 5% et 60% en poids et plus particulièrement entre 20% et 50%, une teneur en liaisons -1,2 de la partie butadiénique comprise entre 4% et 75%, une teneur en liaisons trans-1,4 comprise entre 10% et 80% ; les copolymères de butadiène-isoprène (BIR) et notamment ceux ayant une teneur en isoprène comprise entre 5% et 90% en poids et une Tg de - 40°C à - 80°C ; les copolymères isoprène-styrène (SIR) et notamment ceux ayant une teneur en styrène comprise entre 5% et 50% en poids et une Tg comprise entre -50°C et - 5°C.

Selon un autre mode de réalisation préférentiel, le troisième élastomère diénique est un élastomère isoprénique, plus préférentiellement du caoutchouc naturel ou un polyisoprène de synthèse du type cis-1,4, les différents copolymères d'isoprène et les mélanges de ces élastomères ; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Aux élastomères diéniques précédemment décrits pourraient être également associés, en quantité minoritaire, des élastomères synthétiques autre que diéniques, voire des polymères autres que des élastomères, par exemple des polymères thermoplastiques.

### II.2 - Charge inorganique renforçante

La composition de la bande de roulement du pneumatique selon l'invention a pour caractéristique essentielle de comporter une charge renforçante inorganique (telle que de la silice) dans une proportion de 90 à 150 pce, préférentiellement de 105 à 145 pce.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noir" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/16387. A titre de charge inorganique renforçante, on citera également les charges minérales du type alumineuse, en particulier de l'alumine (Al2O3) ou des (oxyde)hydroxydes d'aluminium, ou encore des oxydes de titane renforçants.

Selon un mode de réalisation préférentiel de l'invention, la charge inorganique renforçante comprend de 50 à 100% en masse de silice ; en d'autres termes, la silice représente 50 à 100% en masse de la charge inorganique renforçante.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

Selon un mode de réalisation avantageux, la composition de la bande de roulement peut comporter du noir de carbone. Le noir de carbone, lorsqu'il est présent, est utilisé de préférence à un taux inférieur à 20 pce, plus préférentiellement inférieur à 10 pce (par exemple entre 0,5 et 20 pce, notamment entre 2 et 10 pce). Dans les intervalles indiqués, on bénéficie des propriétés colorantes (agent de pigmentation noire) et anti-UV des noirs de carbone, sans pénaliser par ailleurs les performances apportées par la charge inorganique renforçante.

Pour coupler la charge inorganique renforçante à l'élastomère diénique, on utilise de manière bien connue un agent de couplage (ou agent de liaison) destiné à assurer une connexion suffisante, de nature chimique et/ou physique, entre la charge inorganique (surface de ses particules) et l'élastomère diénique. Cet agent de couplage est au moins bifonctionnel. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (I) suivante:

(I) Z - A - Sₓ - A - Z ,

dans laquelle:
- x est un entier de 2 à 8 (de préférence de 2 à 5) ;
- les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 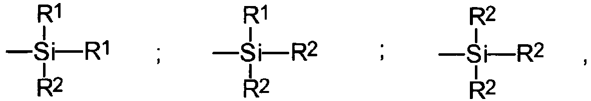 dans lesquelles:
- les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
- les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 précitée (ou US 7 217 751).

A titre d'exemple d'agents de couplage autres qu'un alkoxysilane polysulfuré, on citera notamment des POS (polyorganosiloxanes) bifonctionnels ou encore des polysulfures d'hydroxysilane (R² = OH dans la formule 1 ci-dessus) tels que décrits par exemple dans les demandes de brevet WO 02/30939 (ou US 6 774 255), WO 02/31041 (ou US 2004/051210), et WO2007/061550, ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080, WO 2008/055986, WO 2010/072685.

Bien entendu pourraient être également utilisés des mélanges des agents de couplage précédemment décrits, comme décrit notamment dans la demande WO 2006/125534 précitée.

La teneur en agent de couplage est préférentiellement comprise entre 2 et 20 pce, plus préférentiellement entre 3 et 15 pce.

### II.3 - Système plastifiant

La composition de la bande de roulement du pneumatique selon l'invention a pour autre caractéristique essentielle de comporter un système plastifiant comprenant :
- selon un taux A compris entre 10 et 60 pce, une résine hydrocarbonée présentant une Tg supérieure à 20°C ;
- selon un taux B compris entre 10 et 60 pce, un plastifiant liquide à 20°C dont la Tg est inférieure à -20°C ;
- étant entendu que A+B est supérieur à 45 pce.

Préférentiellement le taux de système plastifiant global A + B est compris entre 50 et 100 pce, plus préférentiellement entre 50 et 85 pce.

Le plastifiant liquide est liquide à 20 °C, il est dit à « basse Tg », c'est-à-dire qu'il présente une Tg inférieure à -20 °C, de préférence inférieure à -40 °C.

Toute huile d'extension, qu'elle soit de nature aromatique ou non-aromatique, tout agent plastifiant liquide connu pour ses propriétés plastifiantes vis-à-vis d'élastomères diéniques, est utilisable. A température ambiante (20°C), ces plastifiants ou ces huiles, plus ou moins visqueux, sont des liquides (c'est-à-dire, pour rappel, des substances ayant la capacité de prendre à terme la forme de leur contenant), par opposition notamment à des résines plastifiantes hydrocarbonées qui sont par nature solides à température ambiante.

Toute huile d'extension, qu'elle soit de nature aromatique ou non aromatique, tout agent plastifiant liquide connu pour ses propriétés plastifiantes vis-à-vis d'élastomères diéniques, est utilisable. A température ambiante (20°C), ces plastifiants ou ces huiles, plus ou moins visqueux, sont des liquides (c'est-à-dire, pour rappel, des substances ayant la capacité de prendre à terme la forme de leur contenant), par opposition notamment aux résines plastifiantes hydrocarbonées qui sont par nature solides à température ambiante.

Conviennent particulièrement les agents plastifiants liquides choisis dans le groupe constitué par les polymères diéniques liquides, les huiles polyoléfiniques, les huiles naphténiques, les huiles paraffiniques, les huiles DAE (*Distillate Aromatic Extracts*)*,* les huiles MES (*Medium Extracted Solvates*), les huiles TDAE (*Treated Distillate Aromatic Extracts*)*,* les huiles RAE (*Residual Aromatic Extracts*), les huiles TRAE (*Treated Residual Aromatic Extracts*), les huiles SRAE (*Safety Residual Aromatic Extracts*)*,* les huiles minérales, les huiles végétales, les plastifiants éthers, les plastifiants esters, les plastifiants phosphates, les plastifiants sulfonates et les mélanges de ces composés. Selon un mode de réalisation plus préférentiel, l'agent plastifiant liquide est choisi dans le groupe constitué par les huiles MES, les huiles TDAE, les huiles naphténiques, les huiles végétales et les mélanges de ces huiles.

Selon un mode de réalisation préférentiel de l'invention, le plastifiant liquide, notamment huile de pétrole, est du type non aromatique. Un plastifiant liquide est qualifié de non aromatique dès lors qu'il présente une teneur en composés aromatiques polycycliques, déterminé avec l'extrait dans du DMSO selon la méthode IP 346, de moins de 3 % en poids, par rapport au poids total du plastifiant. A ce titre peut être utilisé préférentiellement un agent plastifiant liquide choisi dans le groupe constitué par les huiles MES, les huiles TDAE, les huiles naphténiques (à basse ou haute viscosité, notamment hydrogénées ou non), les huiles paraffiniques et les mélanges de ces huiles. Conviennent également comme huile de pétrole les huiles RAE, les huiles TRAE et les huiles SRAE ou les mélanges de ces huiles, qui contiennent de faibles teneurs en composés polycycliques.

Selon un autre mode de réalisation particulier, le plastifiant liquide est un dérivé terpénique ; à titre d'exemple peut être cité notamment le produit « Dimarone » de Yasuhara.

Conviennent également les polymères liquides issus de la polymérisation d'oléfines ou de diènes, comme par exemple ceux choisis dans le groupe constitué par les polybutènes, les polydiènes, en particulier les polybutadiènes, les polyisoprènes, les copolymères de butadiène et d'isoprène, les copolymères de butadiène ou d'isoprène et de styrène, et les mélanges de ces polymères liquides. La masse molaire moyenne en nombre de tels polymères liquides est préférentiellement comprise dans un domaine allant de 500 g/mol à 50 000 g/mol, plus préférentiellement de 1000 g/mol à 10 000 g/mol. A titre d'exemple peuvent être cités notamment les produits « Ricon » de la société Sartomer.

Selon un autre mode de réalisation préférentiel de l'invention, le plastifiant liquide est une huile végétale. A titre préférentiel est utilisée une huile choisie dans le groupe constituée par les huiles de lin, carthame, soja, maïs, coton, navette, ricin, abrasin, pin, tournesol, palme, olive, noix de coco, arachide, pépin de raisin, et les mélanges de ces huiles, en particulier une huile de tournesol. Cette huile végétale, particulièrement huile de tournesol, est plus préférentiellement une huile riche en acide oléique, c'est-à-dire que l'acide gras (ou l'ensemble des acides gras si plusieurs sont présents) dont elle dérive comporte de l'acide oléique selon une fraction massique au moins égale à 60%, plus préférentiellement au moins égale à 70%, en particulier égale ou supérieure à 80%.

Selon un autre mode de réalisation particulier de l'invention, le plastifiant liquide est un éther ; peuvent être cités par exemple les polyéthylène glycols ou les polypropylène glycols.

Conviennent également les plastifiants liquides choisis dans le groupe constitué par les plastifiants esters, les plastifiants phosphates, les plastifiants sulfonates et les mélanges de ces composés. Conviennent notamment les triesters choisis dans le groupe constitué par les triesters d'acide carboxylique, d'acide phosphorique, d'acide sulfonique et les mélanges de ces triesters. A titre d'exemples de plastifiants esters d'acide carboxylique, on peut citer notamment les composés choisis dans le groupe constitué par les trimellitates, les pyromellitates, les phtalates, les 1,2-cyclohexane dicarboxylates, les adipates, les azélates, les sébaçates, les triesters de glycérol et les mélanges de ces composés. Parmi les triesters, on peut citer en particulier les triesters de glycérol, de préférence constitués majoritairement (pour plus de 50 %, plus préférentiellement pour plus de 80 % en poids) d'un acide gras insaturé en C₁₈, c'est-à-dire choisi dans le groupe constitué par l'acide oléique, l'acide linoléique, l'acide linolénique et les mélanges de ces acides ; plus préférentiellement, qu'il soit d'origine synthétique ou naturelle, l'acide gras utilisé est constitué pour plus de 60%, plus préférentiellement encore pour plus de 70% en poids d'acide oléique ; de tels triesters (trioléates) à fort taux d'acide oléique, d'origine naturelle ou de synthèse, sont bien connus, ils ont été décrits par exemple dans la demande WO 02/088238, à titre d'agents plastifiants dans des bandes de roulement pour pneumatiques. A titre de plastifiants phosphates, on peut citer par exemple ceux qui contiennent entre 12 et 30 atomes de carbone, par exemple le trioctyle phosphate.

La résine plastifiante hydrocarbonée présente une Tg supérieure à 20°C.

La dénomination "résine" est réservée dans la présente demande, par définition, à un composé qui est solide à température ambiante (20°C), par opposition notamment à l'agent plastifiant liquide précédemment décrit.

Les résines hydrocarbonées sont des polymères bien connus de l'homme du métier, essentiellement à base de carbone et hydrogène mais pouvant comporter d'autres types d'atomes, utilisables en particulier comme agents plastifiants ou agents tackifiants dans des matrices polymériques. Elles sont par nature miscibles (i.e., compatibles) aux taux utilisés avec les compositions de polymères auxquelles elles sont destinées, de manière à agir comme de véritables agents diluants. Elles ont été décrites par exemple dans l'ouvrage intitulé *"*Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods"*)*.* Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Leur Tg est de préférence supérieure à 30°C, notamment comprise entre 30°C et 95°C.

De manière connue, ces résines hydrocarbonées peuvent être qualifiées aussi de résines thermoplastiques en ce sens qu'elles se ramollissent par chauffage et peuvent ainsi être moulées. Elles peuvent se définir également par un point ou température de ramollissement (en anglais, *"softening point"*)*.* La température de ramollissement d'une résine hydrocarbonée est généralement supérieure d'environ 50 à 60°C à sa valeur de Tg. Le point de ramollissement est mesuré selon la norme ISO 4625 (méthode « Ring and Bail »). La macrostructure (Mw, Mn et Ip) est déterminée par chromatographie d'exclusion stérique (SEC) comme indiqué ci-après.

Pour rappel, l'analyse SEC, par exemple, consiste à séparer les macromolécules en solution suivant leur taille à travers des colonnes remplies d'un gel poreux ; les molécules sont séparées selon leur volume hydrodynamique, les plus volumineuses étant éluées en premier. L'échantillon à analyser est simplement préalablement solubilisé dans un solvant approprié, le tétrahydrofurane à une concentration de 1 g/litre. Puis la solution est filtrée sur un filtre de porosité 0,45 µm, avant injection dans l'appareillage. L'appareillage utilisé est par exemple une chaîne chromatographique "Waters alliance" selon les conditions suivantes : solvant d'élution : le tétrahydrofurane ; température 35°C ; concentration 1 g/litre ; débit :1 ml/min ; volume injecté : 100 µl; étalonnage de Moore avec des étalons de polystyrène ; jeu de 3 colonnes "Waters" en série ("Styragel HR4E", "Styragel HR1" et "Styragel HR 0.5") ; détection par réfractomètre différentiel (par exemple "WATERS 2410") pouvant être équipé d'un logiciel d'exploitation (par exemple "Waters Millenium").

Un étalonnage de Moore est conduit avec une série d'étalons commerciaux de polystyrène à faible Ip (inférieur à 1,2), de masses molaires connues, couvrant le domaine de masses à analyser. On déduit des données enregistrées (courbe de distribution massique des masses molaires) la masse molaire moyenne en masse (Mw), la masse molaire moyenne en nombre (Mn), ainsi que l'indice de polymolécularité (Ip = Mw/Mn). Toutes les valeurs de masses molaires indiquées dans la présente demande sont donc relatives à des courbes d'étalonnages réalisées avec des étalons de polystyrène.

Selon un mode de réalisation préférentiel de l'invention, la résine hydrocarbonée présente au moins une quelconque, plus préférentiellement l'ensemble des caractéristiques suivantes :
- une Tg supérieure à 20°C (en particulier compris entre 30°C et 100°C), plus préférentiellement supérieure à 30°C (en particulier entre 30 C et 95°C);
- un point de ramollissement supérieur à 50°C (en particulier compris entre 50°C et 150°C);
- une masse molaire moyenne en nombre (Mn) comprise entre 400 et 2000 g/mol, préférentiellement entre 500 et 1500 g/mol ;
- un indice de polymolécularité (Ip) inférieur à 3, préférentiellement à 2 (rappel : Ip = Mw/Mn avec Mw masse molaire moyenne en poids).

A titres d'exemples de telles résines hydrocarbonées, on peut citer celles choisies dans le groupe constitué par les résines d'homopolymère ou copolymère de cyclopentadiène (en abrégé CPD), les résines d'homopolymère ou copolymère de dicyclopentadiène (en abrégé DCPD), les résines d'homopolymère ou copolymère de terpène, les résines d'homopolymère ou copolymère de coupe C5, les résines d'homopolymère ou copolymère de coupe C9, les résines d'homopolymère ou copolymère d'alpha-méthyl-styrène et les mélanges de ces résines. Parmi les résines de copolymères ci-dessus, on peut citer plus particulièrement celles choisies dans le groupe constitué par les résines de copolymère (D)CPD/ vinylaromatique, les résines de copolymère (D)CPD/ terpène, les résines de copolymère terpène phénol, les résines de copolymère (D)CPD/ coupe C5, les résines de copolymère (D)CPD/ coupe C9, les résines de copolymère terpène/ vinylaromatique, les résines de copolymère terpène/phénol, les résines de copolymère coupe C5/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C₉ (ou plus généralement d'une coupe C₈ à C₁₀).

Plus particulièrement, on peut citer les résines choisies dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Toutes les résines ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac", par Kolon sous dénomination "Hikorez" ou par la société Exxon Mobil sous dénomination "Escorez" pour ce qui concerne les résines coupe C₅/ styrène ou résines coupe C₅/ coupe C₉, ou encore par la société Struktol sous dénomination "40 MS" ou "40 NS" (mélanges de résines aromatiques et/ou aliphatiques).

### IL4 - Additifs divers

Les compositions de caoutchouc des bandes de roulement des pneumatiques conformes à l'invention comportent également tout ou partie des additifs usuels habituellement utilisés dans les compositions d'élastomères destinées à la fabrication de bandes de roulement, comme par exemple des pigments, des agents de protection tels que cires anti-ozone, anti-ownants chimiques, anti-oxydants, d'autres agents plastifiants que ceux précités, des agents anti-fatigue, des résines renforçantes, des accepteurs (par exemple résine phénolique novolaque) ou des donneurs de méthylène (par exemple HMT ou H3M), un système de réticulation à base soit de soufre, soit de donneurs de soufre edou de peroxyde et/ou de bismaléimides, des accélérateurs de vulcanisation, des activateurs de vulcanisation.

Ces compositions peuvent également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

### II.5 - Préparation des compositions de caoutchouc

Les compositions utilisées dans les bandes de roulement des pneumatiques de l'invention peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé pour préparer de telles compositions comporte par exemple les étapes suivantes :
- malaxer thermomécaniquement (par exemple en une ou plusieurs fois) l'élastomère diénique (E-SBR, BR et troisième élastomère diénique optionnel) avec la charge inorganique renforçante, l'agent de couplage, le cas échéant le noir de carbone, le système plastifiant, jusqu'à atteindre une température maximale comprise entre 110°C et 190°C (phase dite « non-productive ») ;
- refroidir l'ensemble à une température inférieure à 100°C ;
- incorporer ensuite, au cours d'une seconde étape (dite « productive »), un système de réticulation ;
- malaxer le tout jusqu'à une température maximale inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base (les élastomères diéniques, le système plastifiant, la charge inorganique renforçante, l'agent de couplage), puis dans un deuxième temps, par exemple après une à deux minutes de malaxage, les autres additifs, éventuels agents de recouvrement de la charge ou de mise en oeuvre complémentaires, à l'exception du système de réticulation. La durée totale du malaxage, dans cette phase non-productive, est de préférence comprise entre 1 et 15 min.

Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productrice et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'une bande de roulement.

L'invention concerne les pneumatiques précédemment décrits tant à l'état cru (c'est à dire, avant cuisson) qu'à l'état cuit (c'est à dire, après réticulation ou vulcanisation).

### III - EXEMPLES DE REALISATION DE L'INVENTION

### III.1 - Préparation des compositions

On procède pour les essais qui suivent de la manière suivante : on introduit dans un mélangeur interne (taux de remplissage final : environ 70% en volume), dont la température initiale de cuve est d'environ 60 °C, successivement l'élastomère diénique (le E-SBR, le BR et le troisième élastomère diénique optionnel), la charge inorganique renforçante, le système plastifiant, ainsi que les divers autres ingrédients à l'exception du système de vulcanisation. On conduit alors un travail thermomécanique (phase non-productive) en une étape, qui dure au total environ 3 à 4 min, jusqu'à atteindre une température maximale de « tombée » de 165°C.

On récupère le mélange ainsi obtenu, on le refroidit puis on incorpore du soufre et un accélérateur type sulfénamide sur un mélangeur (homo-fmisseur) à 30 °C, en mélangeant le tout (phase productive) pendant un temps approprié (par exemple entre 5 et 12 min). Les compositions ainsi obtenues sont ensuite extrudées sous la forme d'une bande de roulement.

### IIL2 - Tests de roulage des pneumatiques

Les essais qui suivent ont pour but de démontrer l'amélioration de l'adhérence sur sol humide et de la résistance à l'usure de pneumatiques pour véhicules de tourisme selon l'invention, par rapport à des pneumatiques conventionnels.

Pour cela, quatre compositions de caoutchouc pour bande de roulement ont été préparées comme indiqué précédemment, une conformément à l'invention (notée ci-après C.3) et trois non conformément à l'invention (compositions témoins notées ci-après C.1 et C.2 et composition C.4 non conforme à l'invention). Leurs formulations (exprimées en pce) sont présentées dans le tableau 1 annexé.

La composition C.1 est une première composition témoin, à base de SBR solution (SSBR) et de BR, utilisable dans des bandes de roulement de « Pneus Verts » (à faible résistance au roulement) pour véhicules de tourisme. Dans la deuxième composition témoin C.2, les taux de charge inorganique renforçante et de système plastifiant ont été augmentés aux mêmes niveaux que ceux de la composition C.3 selon l'invention, sans changer toutefois la matrice élastomère (SSBR et BR).

La composition C.3 selon l'invention diffère des compositions témoins C.1 et C.2 par le remplacement de 60 pce de SBR solution par 60 pce de SBR émulsion ayant un taux de trans élevé conformément à l'invention. La composition C.3 est à base de BR et du SBR émulsion.

La composition C.4 comparée à la composition C.3 comporte 10 pce de caoutchouc naturel (NR) en lieu et place de 10 pce de BR, soit 30 pce de BR ; elle n'est donc pas conforme à l'invention.

Les compositions C.1 à C.4 se caractérisent toutes par des taux élevés de charge inorganique renforçante (100 ou 120 pce) et de système plastifiant total (55 à 80 pce). Le système plastifiant ici utilisé est un mélange d'une résine hydrocarbonée thermoplastique (résine C5/C9) et d'une huile TDAE.

Des pneumatiques notés P.1 à P.4 comportant des bandes de roulement à base respectivement des compositions C.1 à C.4 ont été montés sur un véhicule tourisme pour être soumis à des tests d'adhérence sur sol humide, de mesure de résistance au roulement et à l'usure, comme indiqué au paragraphe I. Les résultats des tests effectués sur ces pneumatiques sont résumés dans le tableau 2.

On constate tout d'abord que la distance de freinage sur sol humide du pneumatique P.3 conforme à l'invention, c'est-à-dire dont la bande de roulement comporte une composition de caoutchouc à base de 35 à 65 pce du E-SBR à fort taux de trans, et de 35 à 65 pce de BR, combiné à des taux de charge inorganique et de plastifiant élevés, est nettement inférieure à celles des pneumatiques P.1 et P.2 témoins (indice de performance augmenté de 10%). Une telle bande de roulement permet donc d'améliorer fortement l'adhérence sur sol humide des pneumatiques.

Par ailleurs, la résistance à l'usure de la bande de roulement du pneumatique P.3 est supérieure à celles des pneumatiques témoins P.1 et P.2, mais aussi à celle du pneumatique P.4 dont la bande de roulement comporte certes du E-SBR, et du BR, mais en dehors des taux de BR préconisés selon l'invention.

Enfin, dans le cadre du test de résistance au roulement, on note que le pneumatique P.3 conforme à l'invention présente une résistance au roulement équivalente ou très légèrement supérieure à celle des pneumatiques témoins P.1 et P.2.

En conclusion, les résultats de ces essais démontrent que l'emploi en bande de roulement d'un SBR émulsion à fort taux de trans et de BR aux taux préconisés, en présence de taux de charge inorganique renforçante et de plastifiants élevés, permet d'obtenir un pneumatique dont l'adhérence sur sol humide et la résistance à l'usure sont améliorées, par rapport à une composition pour « Pneu Vert », quasiment sans pénalisation de la résistance au roulement.

**Tableau 1**

| Composition n° | C.1 | C.2 | C.3 | C.4 |
|---|---|---|---|---|
| SBR solution (1) | 60 | 60 | - | - |
| BR (2) | 40 | 40 | 40 | 30 |
| NR (3) | - | - | - | 10 |
| SBR émulsion (4) | - | - | 60 | 60 |
| Charge inorganique (5) | 100 | 120 | 120 | 120 |
| Agent de couplage (6) | 8.5 | 8.5 | 8.5 | 8.5 |
| Noir de carbone (7) | 4 | 4 | 4 | 4 |
| Résine (8) | 30 | 35 | 35 | 35 |
| Plastifiants liquides (9) | 25 | 45 | 45 | 40 |
| Plastifiant total | 55 | 80 | 80 | 75 |
| Anti-oxvdant (10) | 2.5 | 2.5 | 2.5 | 2.5 |
| Acide stéarique (11) | 2 | 2 | 2 | 2 |
| ZnO (12) | 1.6 | 1.6 | 1.6 | 1.6 |
| DPG (13) | 1.5 | 1.5 | 1.5 | 1.5 |
| CBS (14) | 2 | 2 | 2 | 2 |
| Soufre | 1.4 | 1.4 | 1.4 | 1.4 |

| | | | | |
|---|---|---|---|---|
| (1) SBR solution (taux exprimé en SBR sec) avec 41% de motifs styrène et 59% de motifs butadiène; avec pour la partie butadiénique, 24% de 1-2, 27% de motifs 1-4 cis, et 50% de motifs 1-4 trans, (Tg = -28°C) ; (2) BR avec 4,3% de motifs 1-2, 2,7% de motifs trans 1-4 ; 93% de motifs cis 1-4 (Tg = -106 °C) ; (3) Caoutchouc naturel peptisé ; (4) SBR émulsion (« Buna SB 1739 » de la société Styron) ; avec 40% de motifs styrène et 60% de motifs butadiène; avec, pour la partie butadiénique, 16% de motifs 1-2, 14% de motifs 1-4 cis et 70% de motifs 1-4 trans ; Tg = 30°C ; (5) Silice (« Ultrasil 7000 GR » de la société Degussa) ; (6) Silane TESPT (« Si69 » de la société Degussa) ; (7) noir de carbone N234 (grade ASTM) ; (8) Résine C5/C9 («Escorez ECR-373» de la société Exxon) ; (9) Huile TDAE (« Vivatec 500 » de la société Klaus Dahleke) ; (10) N-1,3-diméthylbutyl-N-phénylparaphénylènediamine (« Santoflex 6-PPD » de la société Flexsys) ; (11) Stéarine ("Pristerene" de la société Uniquema) ; (12) Oxyde de zinc (grade industriel - société Umicore) ; (13) DPG = Diphénylguanidine (« Perkacit DPG » de la société Flexsys) ; (14) N-cyclohexyl-2-benzothiazyl-sulfénamide (« Santocure CBS » de la société Flexsys). | | | | |

**Tableau 2**

| Pneumatique | P.1 | P.2 | P.3 | P.4 |
|---|---|---|---|---|
| Freinage sur sol humide | 100 | 100 | 110 | 116 |
| Résistance à l'usure | 100 | 100 | 104 | 92 |
| Résistance au roulement | 100 | 98 | 98 | 98 |

## Revendications

1. Pneumatique dont la bande de roulement comprend une composition de caoutchouc comportant au moins :
- 35 à 65 pce (parties en poids pour cent parties d'elastomère) d'un copolymère styrène-butadiène émulsion « E-SBR » dit premier élastomère diénique dont le taux de motifs butadiényl 1,4-trans est supérieur à 50% en poids du total des motifs butadiényl ;
- 35 à 65 pce d'un polybutadiène (BR), à titre de second élastomère diénique ;
- optionnellement, 0 à 30 pce d'un autre élastomère diénique dit troisième élastomère diénique ;
- 90 à 150 pce d'une charge inorganique renforçante ;
- un système plastifiant comprenant :
- selon un taux A compris entre 10 et 60 pce, une résine hydrocarbonée présentant une Tg supérieure à 20°C ;
- selon un taux B compris entre 10 et 60 pce, un plastifiant liquide à 20°C dont la Tg est inférieure à -20°C ;
- la température de transition vitreuse (Tg) étant mesurée par DSC selon la norme ASTM D3418 ;
- étant entendu que A+B est supérieur à 45 pce.

2. Pneumatique selon la revendication 1, dans lequel le taux de motifs butadiényl 1,4-trans du E-SBR est supérieur à 60%.

3. Pneumatique selon l'une quelconque des revendications 1 à 2, dans lequel le taux de styrène du E-SBR est au plus égal à 50 % en poids du copolymère.

4. Pneumatique selon l'une quelconque des revendications 1 à 3, dans lequel la composition de caoutchouc comporte de 45 à 65 pce de E-SBR.

5. Pneumatique selon l'une quelconque des revendications 1 à 4, dans lequel la composition de caoutchouc comporte de 35 à 55 pce de BR.

6. Pneumatique selon l'une quelconque des revendications 1 à 5, dans lequel le troisième élastomère diénique est choisi dans le groupe constitué par le caoutchouc naturel, les polyisoprènes de synthèses, les copolymères de butadiène, les copolymères d'isoprène et les mélanges de ces élastomères.

7. Pneumatique selon l'une quelconque des revendications 1 à 6, dans lequel A+B est compris entre 50 et 100 pce.

8. Pneumatique selon l'une quelconque des revendications 1 à 7, dans lequel la résine hydrocarbonée est choisie dans le groupe constitué par les résines d'homopolymères ou copolymères de cyclopentadiène ou dicyclopentadiène, les résines d'homopolymères ou copolymères terpène, les résines d'homopolymères ou copolymères de coupe C5, les résines d'homopolymères ou copolymères de coupe C9, les résines d'homopolymères ou copolymères d'alpha-méthyl-styrène et les mélanges de ces résines.

9. Pneumatique selon l'une quelconque des revendications 1 à 8, dans lequel le plastifiant liquide est choisi dans le groupe constitué par les polymères diéniques liquides, les huiles polyoléfines, les huiles naphténiques, les huiles paraffiniques, les huiles DAE, les huiles MES, les huiles TDAE, les huiles RAE, les huiles TRAE, les huiles SRAE, les huiles minérales, les huiles végétales, les plastifiants éthers, les plastifiants esters, les plastifiants phosphates, les plastifiants sulfonates et les mélanges de ces composés.

10. Pneumatique selon la revendication 9, dans lequel l'agent plastifiant liquide est choisi dans le groupe constitué par les huiles MES, les huiles TDAE, les huiles naphténiques, les huiles végétales et les mélanges de ces huiles.

11. Pneumatique selon l'une quelconque des revendications 1 à 10, dans lequel la charge inorganique renforçante comporte de la silice.

12. Pneumatique selon la revendication 11, dans lequel la composition de caoutchouc comporte un mélange de noir de carbone et de silice.

## Patentansprüche

1. Reifen, dessen Lauffläche eine Kautschukzusammensetzung umfasst, welche mindestens:
- 35 bis 65 phe (Gewichtsteile pro hundert Teile Elastomer) eines als erstes Dienelastomer bezeichneten Styrol-Butadien-Emulsionscopolymers "E-SBR", dessen Gehalt an trans-1,4-Butadienyleinheiten größer als 50 Gew.-%, bezogen auf die Summe der Butadienyleinheiten, ist;
- 35 bis 65 phe eines als zweites Dienelastomer bezeichneten Polybutadiens (BR);
- gegebenenfalls 0 bis 30 phe eines anderen Dienelastomers, das als drittes Dienelastomer bezeichnet wird;
- 90 bis 150 phe eines verstärkenden anorganischen Füllstoffs;
- ein Weichmachersystem, umfassend:
- gemäß einem Gehalt A zwischen 10 und 60 phe, ein Kohlenwasserstoffharz mit einer Tg von mehr als 20°C;
- gemäß einem Gehalt B zwischen 10 und 60 phe, einen bei 20°C flüssigen Weichmacher mit einer Tg von weniger als -20°C;
- wobei die Glasübergangstemperatur (Tg) durch DSC gemäß ASTM-Norm D3418 gemessen wird;
- mit der Maßgabe, dass A+B mehr als 45 phe beträgt;
umfasst.

2. Reifen nach Anspruch 1, wobei der Gehalt des E-SBR an trans-1,4-Butadienyleinheiten größer als 60% ist.

3. Reifen nach einem der Ansprüche 1 bis 2, wobei der Styrolgehalt des E-SBR höchstens 50 Gew.-% des Copolymers beträgt.

4. Reifen nach einem der Ansprüche 1 bis 3, wobei die Kautschukzusammensetzung 45 bis 65 phe E-SBR umfasst.

5. Reifen nach einem der Ansprüche 1 bis 4, wobei die Kautschukzusammensetzung 35 bis 55 phe BR umfasst.

6. Reifen nach einem der Ansprüche 1 bis 5, wobei das dritte Dienelastomer aus der Gruppe bestehend aus Naturkautschuk, synthetischen Polyisoprenen, Butadien-Copolymeren, Isopren-Copolymeren und Mischungen dieser Elastomere ausgewählt ist.

7. Reifen nach einem der Ansprüche 1 bis 6, wobei A+B zwischen 50 und 100 phe liegt.

8. Reifen nach einem der Ansprüche 1 bis 7, wobei das Kohlenwasserstoffharz aus der Gruppe bestehend aus Homopolymer- oder Copolymerharzen von Cyclopentadien oder Dicyclopentadien, Terpen-Homopolymer- oder -Copolymerharzen, C5-Schnitt-Homopolymer- oder -Copolymerharzen, C9-Schnitt-Homopolymer- oder -Copolymerharzen, Homopolymer- oder Copolymerharzen von alpha-Methylstyrol und Mischungen dieser Harze ausgewählt ist.

9. Reifen nach einem der Ansprüche 1 bis 8, wobei der flüssige Weichmacher aus der Gruppe bestehend aus flüssigen Dienpolymeren, Polyolefinölen, naphthenischen Ölen, Paraffinölen, DAE-Ölen, MES-Ölen, TDAE-Ölen, RAE-Ölen, TRAE-Ölen, SRAE-Ölen, Mineralölen, Pflanzenölen, Ether-Weichmachern, Ester-Weichmachern, Phosphat-Weichmachern, Sulfonat-Weichmachern und Mischungen dieser Verbindungen ausgewählt ist.

10. Reifen nach Anspruch 9, wobei der flüssige Weichmacher aus der Gruppe bestehend aus MES-Ölen, TDAE-Ölen, naphthenischen Ölen, Pflanzenölen und Mischungen dieser Öle ausgewählt ist.

11. Reifen nach einem der Ansprüche 1 bis 10, wobei der verstärkende anorganische Füllstoff Kieselsäure umfasst.

12. Reifen nach Anspruch 11, wobei die Kautschukzusammensetzung eine Mischung von Russ und Kieselsäure umfasst.

## Claims

1. Tyre, the tread of which comprises a rubber composition comprising at least:
- from 35 to 65 phr parts by weight per hundred parts of elastomer of an emulsion styrene/butadiene copolymer "E-SBR", referred to as first diene elastomer, the content of trans-1,4-butadienyl units of which is greater than 50% by weight of the total of the butadienyl units;
- from 35 to 65 phr of a polybutadiene (BR), as second diene elastomer;
- optionally, from 0 to 30 phr of another diene elastomer referred to as third diene elastomer;
- from 90 to 150 phr of a reinforcing inorganic filler;
- a plasticizing system comprising:
- according to a content A of between 10 and 60 phr, a hydrocarbon resin exhibiting a Tg of greater than 20°C;
- according to a content B of between 10 and 60 phr, a plasticizer which is liquid at 20°C, the Tg of which is less than -20°C;
- the glass transition temperature (Tg) measured being by DSC according to Standard ASTM D3418;
- it being understood that A+B is greater than 45 phr.

2. Tyre according to Claim 1, in which the content of trans-1,4-butadienyl units of the E-SBR is greater than 60%.

3. Tyre according to either one of Claims 1 and 2, in which the styrene content of the E-SBR is at most equal to 50% by weight of the copolymer.

4. Tyre according to any one of Claims 1 to 3, in which the rubber composition comprises from 45 to 65 phr of E-SBR.

5. Tyre according to any one of Claims 1 to 4, in which the rubber composition comprises from 35 to 55 phr of BR.

6. Tyre according to any one of Claims 1 to 5, in which the third diene elastomer is selected from the group consisting of natural rubber, synthetic polyisoprenes, butadiene copolymers, isoprene copolymers and the mixtures of these elastomers.

7. Tyre according to any one of Claims 1 to 6, in which A+B is between 50 and 100 phr.

8. Tyre according to any one of Claims 1 to 7, in which the hydrocarbon resin is selected from the group consisting of cyclopentadiene homopolymer or copolymer resins, dicyclopentadiene homopolymer or copolymer resins, terpene homopolymer or copolymer resins, C₅ fraction homopolymer or copolymer resins, C₉ fraction homopolymer or copolymer resins, α-methylstyrene homopolymer or copolymer resins and the mixtures of these resins.

9. Tyre according to any one of Claims 1 to 8, in which the liquid plasticizer is selected from the group consisting of liquid diene polymers, polyolefin oils, naphthenic oils, paraffinic oils, DAE oils, MES oils, TDAE oils, RAE oils, TRAE oils, SRAE oils, mineral oils, vegetable oils, ether plasticizers, ester plasticizers, phosphate plasticizers, sulphonate plasticizers and the mixtures of these compounds.

10. Tyre according to Claim 9, in which the liquid plasticizing agent is selected from the group consisting of MES oils, TDAE oils, naphthenic oils, vegetable oils and the mixtures of these oils.

11. Tyre according to any one of Claims 1 to 10, in which the reinforcing inorganic filler comprises silica.

12. Tyre according to Claim 11, in which the rubber composition comprises a mixture of carbon black and silica.
